# DEMANDE DE BREVET EUROPEEN

(11) **EP 1 453 344 A1**
(43) Date de publication de la demande: **01.09.2004**
(21) Numéro de dépôt: 04290474.8
(22) Date de dépôt: 20.02.2004
(51) Int. Cl.: H04Q 7/38

(54) **Procédé et dispositif pour transfert d'appel entre un système cellulaire et un réseau local en fonction de la position géographique de ce terminal**

(30) Priorité: 25.02.2003 FR 0302266
(71) Demandeur: ALCATEL, 75008 Paris (FR)
(72) Inventeur: Neyret, Nicolas, 74210 St Ferreol (FR); Vergnaud, Gérard, 95130 Franconville (FR)
(74) Mandataire: Sciaux, Edmond

(57) **Abrégé**

Ce procédé permet à un usager mobile passant d'un réseau public de télécommunication sans fil (PLMN) à un réseau privé comportant un réseau local sans fil (WLAN), ou inversement, de recevoir des appels via le réseau le plus adapté à sa localisation. Il consiste à :
- déterminer si un terminal (T2) de l'usager, apte à se connecter au réseau local sans fil (WLAN) , est présent ou absent dans la zone de couverture du réseau local sans fil (WLAN) ; ce terminal pouvant être un terminal de données ;
- et activer un renvoi vers un numéro de renvoi prédéterminé, quand ce terminal est présent dans la zone de couverture du réseau local sans fil (WLAN) ; puis désactiver ce renvoi quand il n'est plus présent dans la zone de couverture du réseau local sans fil (WLAN).
Lorsque le renvoi est fait en direction d'un poste téléphonique filaire, le numéro de renvoi est sélectionné en fonction d'une information de présence désignant une cellule parmi plusieurs cellules constituant le réseau local sans fil.

Application aux réseaux de télécommunication d'entreprise.

## Description

L'invention concerne un procédé permettant à un usager mobile passant d'un réseau public de télécommunication sans fil à un réseau d'entreprise de recevoir des appels via le réseau le plus adapté à sa localisation, le réseau d'entreprise ayant généralement l'avantage de proposer des services supplémentaires et un moindre coût de communication.

Aujourd'hui, un employé d'une entreprise peut disposer simultanément de plusieurs terminaux téléphoniques. Lorsque cet usager est situé hors du site de l'entreprise, il n'a qu'une possibilité : revoir des appels via un réseau public de télécommunication sans fil. Mais lorsque cet usager est dans le site de l'entreprise, il a en général deux possibilités. S'il dispose d'un poste téléphonique relié à un réseau fixe propre à l'entreprise, et d'un poste téléphonique mobile GSM, la route la plus économique pour recevoir des appels est alors celle passant par le réseau fixe de l'entreprise. Dans les locaux de l'entreprise, son poste téléphonique peut-être un poste filaire, un poste sans fil de type DECT (Digital European Cordless Telephone), ou un poste sans fil de type WLAN, c'est à dire relié à un réseau local sans fil.

L'invention concerne plus particulièrement les réseaux d'entreprise comportant un réseau local sans fil, conforme à la norme 802.11 (a ou b), à la norme Bluetooth (IEEE 802.15), ou toute autre norme définissant un réseau local sans fil. Un tel réseau local sans fil comporte une pluralité de points d'accès radio et une pluralité de terminaux mobiles qui comportent chacun des moyens pour établir une liaison radio avec un point d'accès radio. Ces terminaux (Micro ordinateurs, assistants personnels, téléphones mobiles utilisant le protocole Internet, etc.) sont mobiles. Ils peuvent donc entrer ou sortir de la zone de couverture du réseau ; ou changer de point d'accès radio à l'intérieur du même réseau local sans fil. Pour pouvoir leur adresser des données ou établir avec l'un d'eux une communication vocale, un procédé connu permet de déterminer quels sont les terminaux présents auprès de chaque point d'accès radio, à chaque instant.

Il existe des terminaux bi-mode pouvant fonctionner alternativement dans un réseau public de radiotéléphonie, de type GSM par exemple, et dans un réseau local sans fil, conforme à la norme IEEE 802.11 (a ou b) par exemple. Un terminal bi-mode bascule automatiquement dans le mode de fonctionnement correspondant à un réseau local sans fil quand il détecte qu'il est situé dans de la zone de couverture d'un tel réseau local, s'il est autorisé à se connecter, et si ce terminal n'a pas une communication en cours avec le réseau public. Il est envisageable que de futurs terminaux permettent en outre un basculement d'un réseau à l'autre, en cours de communication.

D'autre part, une entreprise comporte généralement un réseau de terminaux téléphoniques filaires. Si un usager n'a pas de téléphone sans fil, il est souhaitable de renvoyer un appel vers un poste filaire qui est attribué à l'usager, ou vers un autre poste qui n'est pas attribué en permanence à l'usager mais qui est proche de l'endroit où il est à l'instant de l'appel, la localisation de cet usager pouvant être connue grâce à la localisation d'un terminal de données porté par cet usager (Ordinateur portable, ou assistant numérique personnel, relié au réseau local sans fil).

Le document **US 5.924.030** décrit un système permettant à des terminaux radio-téléphoniques, de type GSM, de fonctionner alternativement dans un réseau public GSM, et dans un réseau privé GSM, ces deux réseaux étant couplés par un réseau public de téléphonie fixe. Le réseau public GSM comporte une base de données permettant d'enregistrer la présence de terminaux GSM dans la zone de couverture du réseau privé, en appliquant un procédé de localisation conforme à la norme GSM. De même, le réseau privé GSM comporte une base de données permettant d'enregistrer la présence de terminaux GSM dans la zone de couverture du réseau privé, en appliquant le même procédé de localisation. Quand un terminal GSM entre dans la zone de couverture du réseau GSM privé, ce terminal envoie son identité d'abonné mobile internationale, IMSI, à une passerelle qui relie le réseau privé GSM au réseau public GSM, via le réseau public fixe. La passerelle vérifie qu'au moins un numéro du réseau fixe est disponible pour accéder au réseau GSM privé ; et si c'est le cas, la passerelle inscrit le terminal dans la base de données du réseau GSM privé, puis active un renvoi d'appel dans le réseau publique de téléphonie fixe, en envoyant ce numéro et l'identité IMSI à la base de données du réseau GSM public, pour que tout appel vers le terminal soit renvoyé vers le réseau privé GSM.

L'inconvénient de ce système connu est de ne pouvoir fonctionner que si le réseau privé est de type GSM, car il est basé sur les procédures définies dans la norme GSM et il utilise toujours le même numéro (L'identifiant IMSI) et le même terminal GSM, quelle que soit la localisation de l'usager.

Le but de l'invention est de proposer un procédé fiable pour choisir automatiquement le réseau le plus approprié pour communiquer avec un usager lorsqu'il peut être joint par au moins deux réseaux de types différents, d'une part un réseau radio-téléphonique public et d'autre part un réseau privé filaire ou sans fil, qui n'est pas du même type que le réseau radio-téléphonique public. Il est clair que dans ce cas l'usager n'utilisera pas le même terminal (ou ce sera un terminal bi-mode équivalent à deux terminaux), et ce terminal ne pourra pas être désigné par le même numéro que celui du terminal adapté au réseau radio-téléphonique public.

L'objet de l'invention est un procédé permettant à un usager mobile passant d'un réseau public de télécommunication sans fil à un réseau privé, ou inversement, de recevoir des appels via le réseau le plus adapté à sa localisation ; cet usager ayant un terminal au moins apte à se connecter à ce réseau public de télécommunication sans fil, et ayant un terminal au moins apte à se connecter à un réseau local sans fil faisant partie du réseau privé ; consistant à :
- déterminer si le terminal apte à se connecter au réseau local sans fil est présent ou absent dans la zone de couverture du réseau local sans fil ;
- et activer un renvoi vers au moins un numéro de renvoi prédéterminé, quand ce terminal est présent dans la zone de couverture du réseau local sans fil ; puis désactiver ce renvoi quand il n'est plus présent dans la zone de couverture du réseau local sans fil ;
caractérisé en ce que pour activer un renvoi, il consiste à :
- déterminer la localisation d'un usager dans une cellule parmi plusieurs cellules du réseau local sans fil ;
- lire dans une table, à une adresse correspondant à l'usager, plusieurs numéros de renvoi ;
- et sélectionner un de ces numéros de renvoi en fonction d'une information de présence désignant une cellule parmi plusieurs cellules constituant le réseau local sans fil.

Le procédé ainsi caractérisé peut renvoyer l'appel sur :
- le même terminal, mais via le réseau local sans fil, si l'usager à un terminal bi-mode ;
- ou vers un second terminal sans fil, spécifique au réseau sans fil ;
- ou vers un second terminal, fixe, situé dans la cellule où la présence de l'usager a été détectée, grâce au fait que le numéro de renvoi est sélectionné en fonction de la localisation précise de l'usager, déterminée en détectant la présence d'un troisième terminal, tel qu'un ordinateur portable ou un assistant numérique personnel, qui est porté par l'usager et qui est apte à se relier au réseau local sans fil.

L'invention a aussi pour objet un serveur d'applications, pour la mise en oeuvre de ce procédé, comportant des moyens pour :
- envoyer à un réseau public de télécommunication sans fil un message d'activation de renvoi contenant :
   -- un numéro propre à un terminal au moins apte à se connecter au réseau public de télécommunication sans fil et permettant de l'appeler dans le réseau public de télécommunication sans fil,
   -- et un numéro de renvoi ;
   lorsque terminal apte à se connecter au réseau local sans fil devient présent dans la zone de couverture d'un réseau local sans fil ;
- et envoyer au réseau public de télécommunication sans fil un message de désactivation de renvoi contenant le numéro propre au terminal au moins apte à se connecter au réseau public de télécommunication sans fil et permettant de l'appeler dans le réseau public de télécommunication sans fil, lorsque le terminal apte à se connecter au réseau local sans fil n'est plus présent dans la zone de couverture du réseau local sans fil ;
**caractérisé** en ce les moyens pour envoyer à un réseau public de télécommunication sans fil un message d'activation de renvoi comportent :
- une table comportant, pour au moins un usager, plusieurs numéros de renvoi ;
- et des moyens pour sélectionner un de ces numéros de renvoi en fonction d'une information de présence désignant une cellule parmi plusieurs cellules constituant le réseau local sans fil.

L'invention sera mieux comprise et d'autres caractéristiques apparaîtront à l'aide de la description ci-dessous et des figures l'accompagnant :
- La figure 1 représente un exemple de réseau d'entreprise et de réseaux publics où est mis en oeuvre le procédé selon l'invention.
- La figure 2 représente un exemple de table stockée dans un exemple de serveur d'applications, selon l'invention.
- La figure 3 représente un diagramme temporel illustrant des échanges de messages entre les composants des réseaux et le serveur d'applications, représentés sur la figure 1, pour adapter la route suivie par les communications à destination d'un usager en fonction de la localisation de cet usager.
- La figure 4 représente un diagramme temporel illustrant les échanges de messages à l'intérieur du réseau d'entreprise, pour les opérations de détection de présence des terminaux, dans un exemple de mise en oeuvre du procédé selon l'invention.
- La figure 5 illustre une variante de mise en oeuvre du procédé selon l'invention, dans le même exemple de réseau d'entreprise et de réseaux publics que sur la figure 1, mais pour un usager dont le second terminal téléphonique est un poste fixe.

Dans ce qui suit, on ne considèrera pas le problème du passage d'un réseau à l'autre au cours d'une communication déjà établie, mais on considérera seulement le problème du choix du réseau le plus adapté pour établir des communications, à destination de l'usager, après un changement de localisation de cet usager.

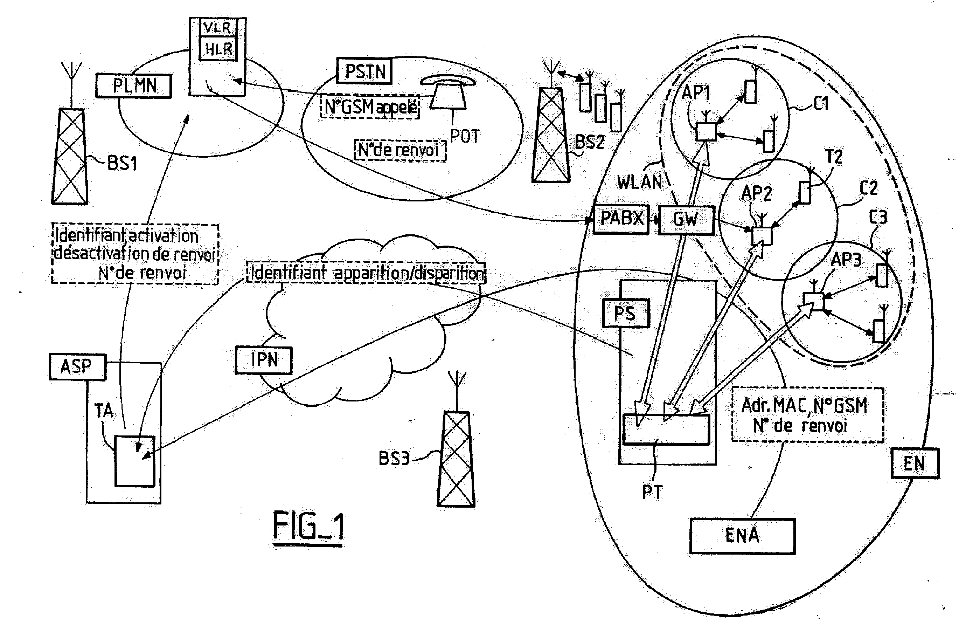

L'exemple représenté sur la **figure 1** comporte :
- un réseau public de radiotéléphonie mobile, PLMN, de type GSM, comportant des stations de base BS1, BS2, BS3 ... , et un enregistreur de localisation nominal, HLR, et un enregistreur de localisation de visiteurs, VLR ;
- un réseau public de télécommunication, fixe et classique, PSTN, du type réseau numérique à intégration de services, par exemple ;
- un réseau de télécommunication fixe utilisant le protocole Internet, IPN, qui est par exemple le réseau public Internet ;
- un réseau d'entreprise EN, comportant notamment :
   -- un autocommutateur PABX,
   -- un réseau local sans fil, WLAN, conforme à la norme IEE 802.11b par exemple, ayant trois points d'accès radio AP1, AP2, AP, desservant respectivement trois cellules C1, C2, C3 ;
   -- une passerelle GW reliant l'autocommutateur PABX et le réseau local sans fil WLAN ;
   -- un serveur de présence PS conforme à l'invention ;
- des terminaux bi-modes, tels que T2, pouvant être utilisés alternativement dans le réseau public de radiotéléphonie mobile, PLMN, et dans le réseau local sans fil WLAN du réseau d'entreprise EN ;
- et un serveur d'applications, ASP, appartenant à un fournisseur de service d'applications, et permettant à des usagers de recevoir des appels via le réseau le plus adapté à la localisation de leurs terminaux respectifs, conformément à l'invention.

Considérons tout d'abord un mode de mise en oeuvre particulier approprié pour les terminaux bi-modes tels que T2.

Le serveur d'applications ASP modifie le fonctionnement du réseau public de radiotéléphonie mobile, PLMN, en modifiant les données inscrites dans le registre HLR de localisation nominale, et dans le registre VLR de localisation de visiteurs, quand le terminal bi-mode T2 entre ou sort de la zone de couverture des cellules C1, C2, C3 du réseau local sans fil WLAN. Le serveur d'applications ASP active un renvoi vers un numéro désignant le même terminal bi-mode T2 dans le réseau local sans fil WLAN, quand ce terminal bi-mode T2 est présent dans la zone de couverture du réseau local sans fil WLAN ; puis désactive ce renvoi quand il n'est plus présent dans la zone de couverture du réseau local sans fil WLAN.

Par exemple, quand la présence du terminal T2 a été détectée dans la cellule C2, parce qu'il s'est connecté au point d'accès AP2, le serveur ASP commande l'inscription dans les registres de localisation HLR et VLR d'un ordre de renvoi vers un numéro dit de renvoi, N°WLAN 2, qui permet de joindre le terminal T2 via le réseau d'entreprise EN, au lieu de le joindre via le réseau radiotéléphonique public PLMN.

Ensuite, si un poste téléphonique classique, POT, du réseau fixe public PSTN, appelle le terminal T2 en composant le numéro, N°GSM 2, qui désigne ce terminal dans le réseau radiotéléphonique public PLMN, les registres de localisation HLR et VLR commandent le renvoi vers le numéro de renvoi, N°WLAN 2. L'autocommutateur PABX établit une connexion classiquement jusqu'au terminal T2, via la passerelle GW qui convertit des trames de type MIC (Modulation à Impulsions Codées) en paquets de données de type protocole Internet ; et via le point d'accès radio AP2 du réseau local sans fil WLAN.

Selon un premier mode de réalisation, le serveur d'applications ASP commande l'activation ou la désactivation d'un renvoi, en envoyant au réseau public de radiotéléphonie PLMN un message conforme au protocole MAP, qui fait partie des normes GSM. Ce message contient :
- un identificateur de terminal appelé IMSI (International Mobile Subscriber Identifier) dont un champ est constitué par le numéro de téléphone de l'usager dans le réseau public PLMN, ou un identifiant temporaire appelé TMSI (Temporary Mobile Subscriber Identifier) propre au terminal T1 ;
- un numéro de renvoi constitué par le numéro de téléphone de l'usager dans le réseau local WLAN, lorsqu'il utilise un terminal bi-mode ;
- et une commande d'activation ou de désactivation de renvoi.

Ce message est transmis sur une ligne téléphonique classique au moyen de deux modem situés aux deux extrémités de la ligne. Grâce à l'utilisation du protocole MAP, aucune modification n'est nécessaire dans le réseau PLMN pour permettre la mise en oeuvre du procédé selon l'invention. Il suffit que le serveur d'applications ASP ait un droit d'accès aux registres de localisation HLR et VLR du réseau PLMN (par un contrat entre l'opérateur du serveur ASP et l'opérateur du réseau PLMN).

Selon un autre mode de réalisation, le serveur d'applications ASP envoie au réseau public de radiotéléphonie PLMN un message de type SMS (Short Message System, tel que défini dans la norme GSM), en incluant dans ce message les mêmes informations que ci-dessus. Ainsi le serveur d'application ASP est vu par le réseau PLMN comme un terminal de type GSM envoyant un message de type SMS pour commander le renvoi des appels adressés à ce terminal. Le message est transmis sur une ligne téléphonique classique au moyen de deux modem situés aux deux extrémités de la ligne. Grâce à l'utilisation de messages de type SMS, aucune modification n'est nécessaire dans le réseau PLMN pour permettre la mise en oeuvre du procédé selon l'invention.

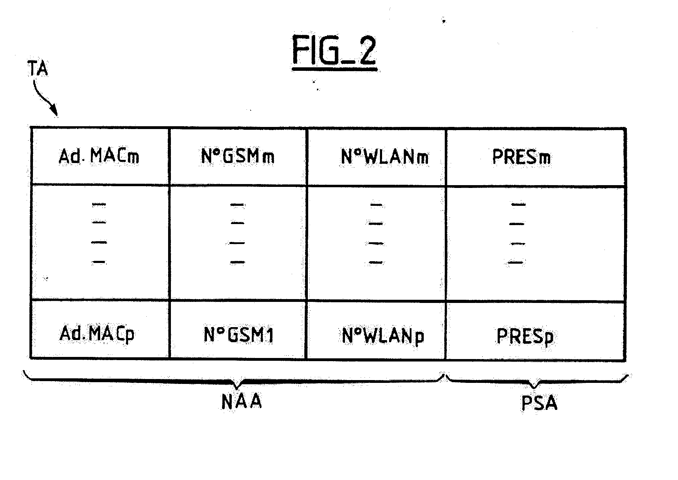

Le serveur d'applications ASP comporte des moyens logiciels pour exécuter l'une des procédures décrites ci-dessus, et contient une table TA qui mémorise les informations nécessaires. La **figure 2** représente un exemple de réalisation de cette table TA, dans le cas de terminaux bi-modes. Cet exemple comporte une ligne par usager autorisé à bénéficier du service permettant la sélection du réseau le plus approprié. Chaque ligne est repérée par un identifiant permettant de distinguer les usagers. Cet identifiant est fourni à la station de base par le terminal et est constitué par exemple d'une adresse physique attribuée par le fabriquant de ce terminal. Mais ce n'est pas la seule possibilité, par exemple le nom de l'utilisateur peut-être utilisé. Par exemple, pour l'usager d'un terminal bi-mode Tm, une ligne contient :
- l'identifiant Ad.MACm, fourni par le terminal Tm et permettant d'identifier l'usager ;
- l'identifiant IMSI (International Mobile Subscriber Identifier) propre au terminal Tm, et qui est constitué essentiellement du numéro de téléphone N°GSMm de ce terminal Tm dans le réseau de radiotéléphonie public PLMN, ou l'identifiant temporaire TMSI (Temporary Mobile Subscriber Identifier) propre au terminal T1 ;
- un numéro de téléphone N°WLANm propre au terminal Tm dans le réseau local WLAN ;
- et un indicateur PRESm ayant une valeur binaire qui indique la localisation du terminal Tm, en traduisant la présence ou l'absence de ce terminal dans la zone de couverture du réseau local WLAN.

La table TA comporte deux parties :
- Une partie NAA qui est accessible par un administrateur ENA du réseau d'entreprise EN pour y inscrire les trois premières informations ci-dessus, quand un nouvel usager est autorisé à bénéficier du service de sélection automatique du réseau le plus adapté à sa localisation ; et inversement, pour effacer ces informations quand un usager n'est plus autorisé.
- Une partie PSA qui est accessible par le serveur de présence PS du réseau d'entreprise EN, pour y inscrire et mettre à jour l'indicateur de présence / absence chaque fois que le serveur de présence PS constate l'entrée ou la sortie d'un usager, parmi ceux autorisés à bénéficier du service de sélection automatique du réseau le plus adapté à sa localisation.

L'administrateur ENA et le serveur de présence PS téléchargent ces informations dans la table TA via le réseau Internet IPN.

Considérons le cas d'un usager qui utilise deux terminaux mobiles distincts : un terminal spécifiqueT1 pour le réseau public PLMN et un terminal Tp spécifique pour le réseau local WLAN. La ligne de la table TA correspondant à cet usager contient **(Figure 2)** :
- l'identifiant Ad.MACp, fourni par le terminal Tp et permettant d'identifier l'usager ;
- l'identifiant IMSI (International Mobile Subscriber Identifier) propre au terminal T1, et qui est constitué essentiellement du numéro de téléphone N°GSM1 de ce terminal T1 dans le réseau de radiotéléphonie public PLMN ; ou l'identifiant temporaire TMSI (Temporary Mobile Subscriber Identifier) propre au terminal T1 ;
- un numéro de téléphone N°WLANp propre au terminal Tp dans le réseau local WLAN ;
- et un indicateur PRESp ayant une valeur binaire qui indique la localisation du terminal Tp, en traduisant la présence ou l'absence de ce terminal dans la zone de couverture du réseau local WLAN.
Le cas d'un usager utilisant en outre au moins un poste fixe sera traité plus loin. poste

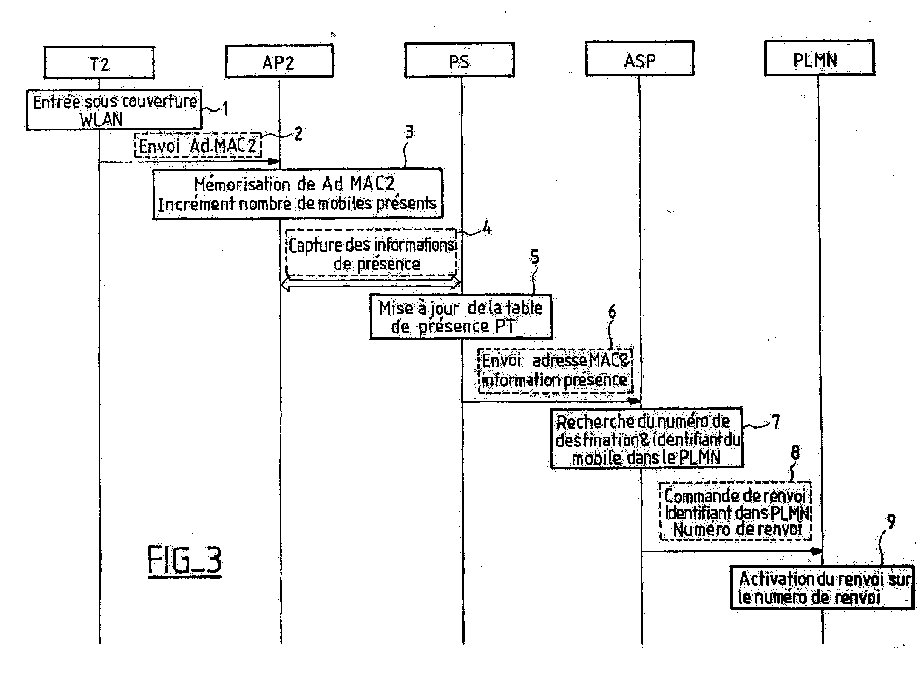

La **figure 3** représente un diagramme temporel illustrant des échanges de messages entre les divers composants des réseaux représentés sur la figure 1, et le serveur d'applications ASP, lors de l'entrée d'un terminal bi-mode T2 dans la cellule C2 desservie par le point d'accès radio AP2 du réseau local sans fil WLAN :
1) Le terminal T2 entre dans la cellule C2. Il détecte la présence du point d'accès AP2 et bascule dans le mode fonctionnement correspondant au réseau local sans fil WLAN.
2) Il envoie au point d'accès AP2 un message contenant son adresse physique Ad. MAC2.
3) Le point d'accès AP2 mémorise cette adresse physique Ad. MAC2.
4) Le serveur de présence PS interroge périodiquement les points d'accès radio, AP1, A2, AP3, selon un procédé décrit plus loin, pour capturer les adresses physiques des terminaux actuellement présents dans la zone de couverture du réseau sans fil WLAN. Il comporte une table PT dite de présence, qui mémorise d'une part des adresses physiques, et d'autre part des indicateurs de présence/absence respectivement pour chacun des terminaux qui sont autorisés à bénéficier du service. Il met à jour les valeurs des indicateurs dans cette table PT au fur et à mesure de l'arrivée des adresses physiques des terminaux actuellement présents.
6) Chaque fois qu'il met à jour une valeur d'indicateur de présence/absence, le serveur de présence PS envoie un message au serveur d'application ASP pour mettre à jour la table TA. Dans cet exemple, ce message contient l'adresse physique Ad. MAC2, et une valeur d'indicateur de présence /absence PRES2 indiquant une présence du terminal T2.
7) Le serveur d'application ASP met à jour la table TA en recherchant la ligne qui contient l'adresse physique Ad. MAC2 pour y inscrire la nouvelle valeur de l'indicateur de présence/absence, et pour y lire l'identifiant IMSI N°GSM2 du terminal T2 dans le réseau PLMN, ainsi que le numéro de renvoi constitué par le numéro N°WLAN2 de ce terminal T2 dans le réseau local WLAN.
8) Le serveur d'application ASP envoie un message aux enregistreurs de localisation HLR et VLR du réseau public PLMN pour commander un renvoi des appels destinés au terminal T2. Ce message contient : l'identifiant IMSI N°GSM2 et le numéro de renvoi N°WLAN2 lus dans la table TA, et un ordre d'activation de renvoi.
9) La fonction de renvoi devient active dans le réseau public PLMN. Pour qu'un usager puisse recevoir des appels via le réseau le plus adapté à sa localisation, il faut détecter d'abord la présence de cet usager de manière fiable. On connaît des protocoles de gestion de réseau local sans fil permettant de détecter la présence d'un terminal. Ils permettent à une unité centrale de collecter des informations sur l'ensemble d'un réseau local sans fil, et de les exploiter. Ils sont satisfaisants pour signaler qu'un terminal a été mis en service ou a été mis hors service. Par contre, il ne sont pas satisfaisants lorsqu'un terminal entre et sort fréquemment de la zone de couverture d'un point d'accès, parce qu'il se déplace en bordure de la zone de couverture du réseau local sans fil. En particulier, on ne connaît pas de procédé permettant ce choix lorsque les deux réseaux sont, par exemple, GSM et IEEE 802.11

Lors de chaque entrée et de chaque sortie d'un même terminal, le point d'accès radio qui est en liaison avec ce terminal envoie une suite de messages à l'entité centrale, et ces messages continuent à être envoyés pendant quelques secondes après que le terminal soit définitivement entré ou sorti de la zone de couverture. Ces messages sont contradictoires entre eux car ils indiquent alternativement des entrées et sorties. Les points d'accès radio actuels sont incapables de filtrer ces messages. La détection de présence n'est donc pas fiable quand un terminal est en bordure de la zone de couverture d'un réseau local sans fil. Ce n'est donc pas un moyen satisfaisant pour choisir automatiquement le réseau le plus approprié en fonction de la localisation d'un terminal.

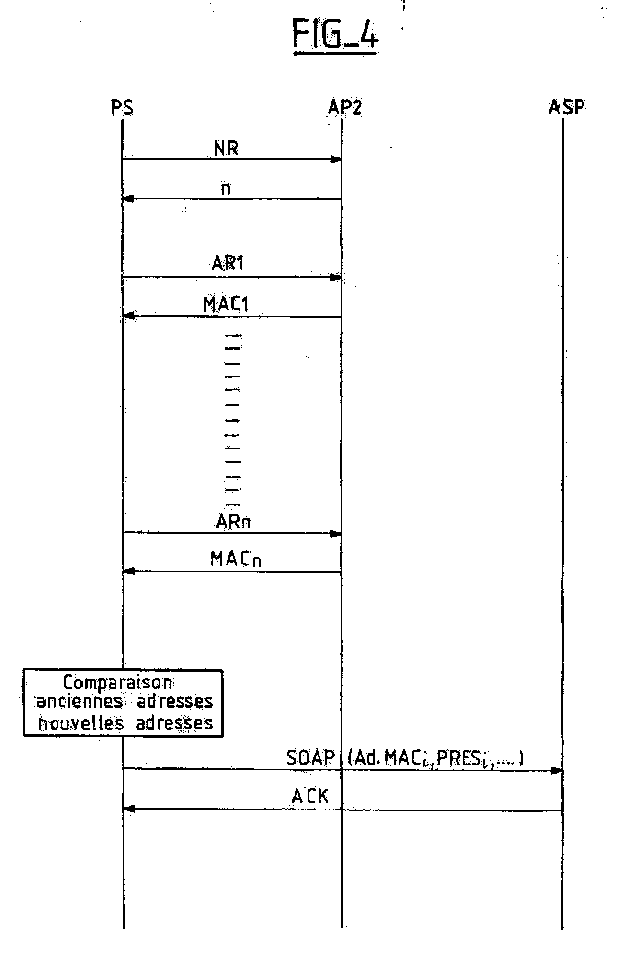

La **figure 4** illustre un mode de mise en oeuvre préféré du procédé selon l'invention, en ce qui concerne la détection de présence des terminaux, tels que T2, dans la zone de couverture C1, C2, C3 du réseau local sans fil WLAN. Elle représente les échanges de messages entre le serveur de présence PS, le point d'accès AP2 pris à titre d'exemple, et le serveur d'applications ASP. Les messages échangés sont conformes au protocole SNMP (Simple Network Management Protocol), qui est couramment utilisé pour la gestion des réseaux locaux sans fil.
- Le serveur de présence SP envoie un message NR à chaque point d'accès radio AP1, AP2, AP3, successivement et à intervalles réguliers, pour lui demander une indication n du nombre de terminaux actuellement présents dans la zone couverte par ce point d'accès. Chaque point d'accès radio, tel que AP2, répond en envoyant un message contenant le nombre n des terminaux présents dans la zone qu'il couvre.
- Sachant ce nombre n, le serveur de présence SP envoie ensuite, pour chaque point d'accès radio AP1, AP2, AP3, successivement, une suite de n messages AR1, ...., ARn ; et chaque message demandant à ce point d'accès d'envoyer une seule adresse physique de terminal présent. Le point d'accès considéré répond à chaque demande par un message contenant chaque fois une adresse non encore envoyée. Il envoie donc n messages distincts contenant respectivement les adresses physiques Ad. MAC1, ..., Ad. MACn des n terminaux actuellement présents dans la zone couverte par ce point d'accès.
- Le serveur de présence SP enregistre ces adresses dans la table de présence PT, et compare chaque adresse avec celles précédemment reçues, afin de détecter les terminaux récemment entrés et les terminaux récemment sortis.
- Le serveur de présence SP envoie ensuite au serveur d'applications ASP un message SOAP contenant les adresses physiques Ad. MACi, ... des terminaux récemment entrés et les terminaux récemment sortis, avec les indicateurs de présence/absence PRESi correspondant, pour mettre à jour la table TA du serveur d'application ASP.

Le serveur de présence PS procure une détection de présence fiable parce qu'il repose sur une interrogation des terminaux, faite par chaque point d'accès radio mais déclenchée à l'initiative de ce serveur PS. Cette interrogation est donc déclenchées indépendamment des entrées et sorties de terminaux dans la zone de couverture. La détection n'est donc pas perturbée par un trop grand nombre d'entrées et sorties, puisque ce ne sont plus des événements déclencheurs de la procédure de détection de présence.

Un tel fonctionnement du serveur de présence PS est nécessaire pour une détection fiable de la présence parce que les points d'accès radio actuels ne vérifient pas la localisation d'un terminal sur une certaine durée. Si, dans le futur, il existe des points d'accès radio réalisant une détection de présence plus fiable, le procédé selon l'invention pourra être appliqué sans recourir à la procédure décrite ci-dessus en se référant à la figure 4. Le serveur de présence PS obtiendra alors, en provenance des points d'accès, des informations de présence immédiatement exploitables.

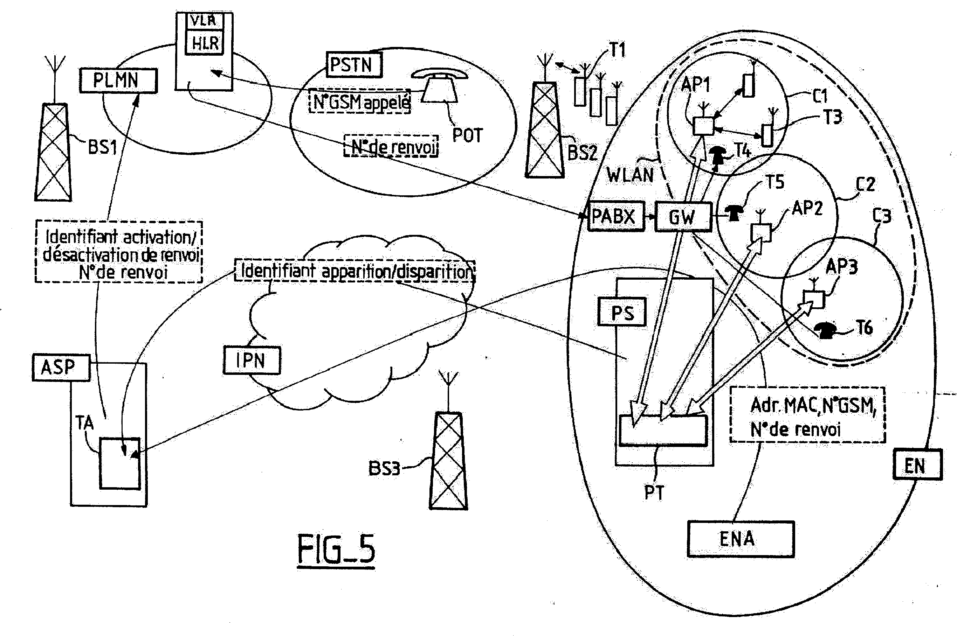

La **figure 5** illustre une variante de mise en oeuvre du procédé selon l'invention, dans le même exemple de réseau d'entreprise et de réseaux publics que sur la figure 1, mais pour un usager dont le second terminal téléphonique est un poste fixe T4. En effet cet usager dispose :
- d'un terminal téléphonique mobile T1 spécifique GSM,
- d'un terminal mobile T3 spécifique pour le réseau local WLAN, mais sans fonctions téléphoniques (par exemple : un assistant numérique personnel ayant une interface radio),
- et d'un terminal téléphonique fixe T4, relié à l'autocommutateur PABX par un fil.

Selon cette variante de mise en oeuvre, le terminal T3 est utilisé pour détecter la présence de l'usager non seulement dans la zone de couverture du réseau local WLAN mais en outre pour déterminer dans quelle cellule parmi les cellules C1, C2, C3. Si l'usager est dans la cellule C1, les appels qui lui sont destinés sont renvoyés vers le terminal fixe T4. Si l'usager est dans la cellule C2, les appels qui lui sont destinés sont renvoyés vers le terminal fixe T5. Si l'usager est dans la cellule C3, les appels qui lui sont destinés sont renvoyés vers le terminal fixe T6.

Le serveur de présence PS mémorise dans sa table PT cette information supplémentaire. Il informe le serveur d'application ASP chaque fois qu'il constate un changement de cellule, ou une sortie du réseau local WLAN. L'indicateur de présence / absence PRESi n'a plus une valeur binaire. Il est constitué de plusieurs bits pour coder toutes les localisations possibles, plus l'absence. Dans la table TA, le champ contenant un numéro de renvoi N°WLANi est remplacé par un champ pouvant contenir trois numéros de renvoi correspondant respectivement aux postes fixes T4, T5, T6. Le serveur d'application ASP commande un nouveau renvoi chaque fois que le serveur de présence PS lui envoie un message indiquant un changement de cellule, et le numéro de renvoi est le numéro de poste fixe correspondant à la nouvelle cellule, celle-ci étant indiquée par la nouvelle valeur de l'indicateur PRESi.

Selon une variante de mise en oeuvre, la table TA peut être située hors du serveur d'applications ASP. Elle peut être découpée en plusieurs parties correspondant respectivement à des entreprises distinctes. Chaque partie est alors mémorisée dans un serveur situé dans une entreprise différente, et le serveur d'applications ASP utilise alors le protocole LDAP (Light Directory Application Protocol) pour exploiter cette table répartie.

L'invention concerne les usagers ayant un terminal bi-mode, mais aussi :
- Les usagers ayant deux terminaux spécifiques respectivement pour les deux modes sans fil : par exemple un terminal téléphonique GSM, et un ordinateur portable ayant des fonctions téléphoniques, ce dernier ayant une interface radio pour se connecter à un réseau local sans fil.
- Les usagers ayant un terminal téléphonique spécifique GSM, un poste téléphonique fixe, et un terminal de données ayant une interface radio pour se connecter à un réseau local sans fil, mais n'ayant pas de fonction téléphonique.

## Revendications

1. Procédé permettant à un usager mobile passant d'un réseau public de télécommunication sans fil (PLMN) à un réseau privé (EN), ou inversement, de recevoir des appels via le réseau le plus adapté à sa localisation ; cet usager ayant un terminal (T1) au moins apte à se connecter à ce réseau public de télécommunication sans fil, et ayant un terminal (T2) au moins apte à se connecter à un réseau local sans fil (WLAN) faisant partie du réseau privé ; consistant à :
- déterminer si le terminal (T2) apte à se connecter au réseau local sans fil est présent ou absent dans la zone de couverture du réseau local sans fil (WLAN) ;
- et activer un renvoi vers un numéro de renvoi prédéterminé, quand ce terminal (T2) au moins apte à se connecter à un réseau local sans fil (WLAN) est présent dans la zone de couverture du réseau local sans fil ; puis désactiver ce renvoi quand il n'est plus présent dans la zone de couverture du réseau local sans fil ;
**caractérisé en ce que** pour activer un renvoi, il consiste à :
- déterminer la localisation d'un usager dans une cellule parmi plusieurs cellules (C1, C2, C3) du réseau local sans fil (WLAN) ;
- lire dans une table (TA), à une adresse correspondant à l'usager, plusieurs numéros de renvoi (T4, T5, T6) ;
- et sélectionner un de ces numéros de renvoi en fonction d'une information de présence désignant une cellule parmi plusieurs cellules constituant le réseau local sans fil.

2. Procédé selon la revendication 1, **caractérisé en ce qu'**il consiste en outre à inscrire dans cette table (TA), pour chaque usager autorisé à recevoir des appels via le réseau le plus adapté à sa localisation :
-- un numéro (N°GSMm) propre au terminal (T1 ; T2) au moins apte à se connecter au réseau public de télécommunication sans fil (PLMN) et permettant de l'appeler dans le réseau public de télécommunication sans fil (PLMN),
-- une pluralité de numéros de renvoi (T4, T5, T6) correspondant respectivement à une pluralité de cellules (C1, C2, C3) du réseau local sans fil (WLAN) où cet usager peut être localisé ;
-- et une information de présence désignant une cellule parmi plusieurs cellules constituant le réseau local sans fil.

3. Procédé selon la revendication 2, **caractérisé en ce qu'**il consiste en outre à inscrire dans une table (TA) d'un serveur d'application (ASP) une nouvelle information de présence pour chaque usager dont la localisation a changé.

4. Procédé selon la revendication 1, **caractérisé en ce qu'**un numéro de renvoi correspond à un terminal d'un réseau fixe (EN).

5. Procédé selon la revendication 1, **caractérisé en ce** pour déterminer la localisation d'un usager dans la zone de couverture d'un réseau local sans fil (WLAN), il consiste à :
- obtenir (NR) successivement de chaque point d'accès radio (AP1, AP2, AP3) d'un réseau local (WLAN) le nombre de terminaux présents dans sa zone de couverture ;
- puis, pour chaque point d'accès radio (AP2) du réseau local sans fil (WLAN), obtenir de ce point d'accès n fois un identifiant (Ad. MACm) propre à un terminal, n étant le nombre des terminaux (T2) présents dans la zone de couverture de ce point (AP2) ;
- et recevoir puis enregistrer ces identifiants (Ad. MACm), et les comparer avec des identifiants précédemment enregistrés, pour en déduire quels sont les terminaux qui sont devenus présents et ceux qui sont devenus absents dans la zone de couverture du réseau local sans fil (WLAN).

6. Serveur d'applications (ASP), pour la mise en oeuvre du procédé selon la revendication 1, comportant des moyens pour:
- envoyer à un réseau public de télécommunication sans fil (PLMN) un message d'activation de renvoi contenant :
-- un numéro (N°GSMm) propre à un terminal (T1 ; T2) au moins apte à se connecter au réseau public de télécommunication sans fil (PLMN) et permettant de l'appeler dans le réseau public de télécommunication sans fil (PLMN),
-- et un numéro de renvoi ;
lorsque terminal (T2 ; T4) apte à se connecter au réseau local sans fil (WLAN) devient présent dans la zone de couverture d'un réseau local sans fil (WLAN) ;
- et envoyer au réseau public de télécommunication sans fil (PLMN) un message de désactivation de renvoi contenant le numéro (N°GSMm) propre au terminal (T1 ; T2) au moins apte à se connecter au réseau public de télécommunication sans fil (PLMN) et permettant de l'appeler dans le réseau public de télécommunication sans fil (PLMN), lorsque le terminal (T2 ; T3) apte à se connecter au réseau local sans fil (WLAN) n'est plus présent dans la zone de couverture du réseau local sans fil (WLAN) ;
**caractérisé** en ce les moyens pour envoyer à un réseau public de télécommunication sans fil (PLMN) un message d'activation de renvoi comportent :
- une table (TA) comportant, pour au moins un usager, plusieurs numéros de renvoi (T4, T5, T6) ;
- et des moyens pour sélectionner un de ces numéros de renvoi en fonction d'une information de présence désignant une cellule parmi plusieurs cellules (C1, C2, C3) constituant le réseau local sans fil (WLAN).
